# DEMANDE DE BREVET EUROPEEN

(11) **EP 1 467 267 A1**
(43) Date de publication de la demande: **13.10.2004**
(21) Numéro de dépôt: 04001916.8
(22) Date de dépôt: 29.01.2004
(51) Int. Cl.: G05B 19/042, E06B 9/32

(54) **Procédé de fermeture des accès à un bâtiment**

(30) Priorité: 05.02.2003 FR 0301337
(71) Demandeur: SOMFY, 74300 Cluses (FR)
(72) Inventeur: Desbiolles, Claude, 74800 Eteaux (FR)
(74) Mandataire: Grosfillier, Philippe

(57) **Abrégé**

Le procédé automatique activé par un événement non provoqué par l'utilisateur et permettant la fermeture d'un ensemble de dispositifs de fermeture motorisés obéissant à une unité de gestion et équipant des ouvertures permettant l'accès à un bâtiment est caractérisé en ce qu'il comprend les étapes suivantes :
- émission d'un ordre de fermeture des dispositifs lors de la survenance de l'événement,
- activation d'un groupe de dispositifs vers une position prédéterminée,
- temporisation,
- activation de l'ensemble des dispositifs vers leur position de fermeture complète.

Un tel procédé permet d'éviter l'occurrence de situations dans lesquelles les habitants d'une maison se retrouvent dans l'impossibilité d'accéder à l'intérieur de leur maison, suite à une fermeture programmée de ses dispositifs de fermeture.

## Description

La présente invention concerne un procédé automatique activé par un événement non provoqué par l'utilisateur et permettant la fermeture d'un ensemble de dispositifs de fermeture motorisés obéissant à une unité de gestion et équipant des ouvertures permettant l'accès à un bâtiment.

Elle se rapporte en particulier à la signalisation de manoeuvres automatiques de fermeture des dispositifs de fermeture motorisés tels que des volets roulants, ces manoeuvres étant commandées par des moyens de programmation horaire.

Deux problèmes relatifs à la signalisation apparaissent dans une installation de dispositifs de fermeture dont les manoeuvres sont gérées de manière automatique par un programme.

Le premier problème concerne la nécessité pour un utilisateur de recevoir une confirmation par un signal visuel et/ou sonore que le système de programmation a bien enregistré une séquence de programmation.

De la demande EP 1 026 561, on connaît un dispositif de programmation horaire de commande de fermeture et/ou d'ouverture d'un système d'occultation apportant une solution à ce problème. Ce dispositif comprend une unité de gestion intégrant au moins une horloge. Cette unité de gestion est programmable pour permettre des commandes d'ouverture et/ou de fermeture de volets roulants, par l'intermédiaire d'un boîtier de contrôle et d'un organe de commande, dans des plages horaires autour d'heures prédéfinies. Ainsi, le dispositif peut facilement être adapté aux habitudes de l'utilisateur et aux changements d'horaires été/hiver. Il peut en outre être utilisé pour simuler une présence en l'absence prolongée de l'utilisateur. Un dispositif de signalisation visuelle permet par un cycle de fonctionnement prédéfini du volet roulant lui-même d'informer l'utilisateur de la bonne réception d'une séquence de programmation. Le cycle de fonctionnement prédéfini peut consister, par exemple, en une légère descente suivie d'une remontée d'amplitude identique du volet roulant.

Le deuxième problème associé à un dispositif automatique de commande de fermeture et/ou d'ouverture d'un système d'occultation motorisé est le suivant. Dans un dispositif de commande à gestion horaire tel que décrit dans la demande EP 1 026 561, utilisé par exemple dans une maison, un ordre automatique est donné le soir pour la fermeture de l'ensemble des volets roulants. Lorsque les habitants se trouvent à l'extérieur de la maison, par exemple dans leur jardin, au moment de cette fermeture automatique et ne se rendent pas compte de la fermeture des volets, ceux-ci se retrouvent alors dans l'impossibilité d'accéder à l'intérieur de leur maison, jusqu'à l'ordre automatique suivant de commande d'ouverture des volets qui sera exécuté en principe le lendemain matin. Le dispositif de signalisation décrit dans la demande EP 1 026 561 permet uniquement de confirmer la réception d'une commande et n'apporte pas d'éléments suggérant une solution pour le problème posé.

L'utilisation de voyants lumineux signalant le début d'une procédure d'ouverture ou de fermeture d'une porte d'accès, notamment pour un accès collectif (par exemple une porte de garage) est connue et réglementée. Cette solution offre peu d'avantages dans le cas du problème précédemment exposé. En effet, il faudrait prévoir des voyants lumineux au moins sur chaque coté de la maison afin que ceux-ci puissent être vus où que se trouvent les habitants. Les désavantages liés à une telle solution sont nombreux, notamment au niveau du coût et des perturbations engendrées pour le voisinage.

D'autres dispositifs de signalisation associés à des dispositifs de commande de moyens d'occultation motorisés sont connus. En effet, les dispositifs actuels de commande de volets roulants comprennent pour la plupart des moyens pour gérer un ensemble de volets roulants et ne sont plus limités à des commandes individuelles. Dans de tels dispositifs, l'utilisateur ne voit pas nécessairement l'ensemble des volets à commander. Il est donc important pour lui de pouvoir être assuré que tous les volets roulants sont bien fermés au terme d'une commande de fermeture.

De la demande EP 0 718 730, on connaît un système dans lequel les volets roulants peuvent être configurés en groupes, définis et modifiables à tout moment par l'utilisateur à l'aide d'une unité programmable. Ces groupes sont ensuite commandés de façon centrale, comme défini par l'utilisateur grâce à l'unité programmable. Une solution pour un retour d'information, susceptible de confirmer à l'utilisateur la bonne réception d'une séquence de programmation, est proposée dans ce document sous la forme d'un dispositif de signalisation visuelle et/ou sonore. Ce dispositif de signalisation peut être également défini par le volet roulant lui-même, sous la forme d'un cycle de fonctionnement ou d'un mouvement prédéfini. Ce cycle de fonctionnement peut consister par exemple en un mouvement de descente partielle du volet roulant jusqu'à une position intermédiaire puis lorsque les différents volets ont renvoyé l'information selon laquelle l'ordre a été exécuté pour chacun d'eux, en la reprise du mouvement du volet roulant jusqu'à sa fin de course basse.

Dans la demande EP 0 718 729, le retour d'information se fait au niveau du volet roulant vers lequel a été émise la commande. Ainsi, l'utilisateur peut être informé d'une part que l'ordre de commande a bien été reçu (par exemple par le mouvement de descente partielle) et correctement exécuté (par la reprise et la fin du mouvement du volet roulant). Par ce mouvement partiel, l'utilisateur est également informé qu'il y a bien eu une commande de l'ensemble des volets roulants et non une commande sur un volet roulant particulier, celle-ci aurait conduit à un mouvement sans interruption du volet roulant.

Ce dispositif de signalisation est utilisé alors que l'utilisateur est actif en tant que donneur d'ordres pour une commande de fermeture en particulier et/ou d'ouverture ou pour signaler à l'utilisateur une mise en mode de programmation correcte du dispositif de commande (cycle de signalisation différent).

Les dispositifs de signalisation décrits ci-dessus permettent, à nouveau, uniquement de confirmer la réception et l'exécution d'une commande. Ils n'apportent pas d'éléments de solution au problème posé.

Le but de l'invention est de mettre en oeuvre un procédé de fermeture automatique d'un ensemble de dispositifs de fermeture améliorant les procédés de l'art antérieur et apportant une solution au problème posé. En particulier, l'invention propose un procédé de fermeture automatique permettant d'éviter l'occurrence de situations dans lesquelles les habitants d'une maison se retrouvent dans l'impossibilité d'accéder à l'intérieur de leur maison, suite à une fermeture programmée de ses dispositifs de fermeture.

Le procédé de fermeture automatique selon l'invention est caractérisé par la partie caractérisante de la revendication 1.

Différents modes d'exécution du procédé sont définis par les revendications dépendantes 2 à 6.

L'invention concerne encore une installation définie par la revendication indépendante 7.

Les revendications dépendantes 8 et 9 définissent des modes de réalisation de cette installation.

Le dessin annexé représente, à titre d'exemples, deux modes d'exécution du procédé selon l'invention.

La figure 1 est un schéma d'une installation permettant l'exécution du procédé selon l'invention.

La figure 2 est un ordinogramme d'un premier mode d'exécution du procédé selon l'invention.

La figure 3 est un ordinogramme d'une variante du premier mode d'exécution du procédé selon l'invention.

La figure 4 est un ordinogramme d'un deuxième mode d'exécution du procédé selon l'invention.

La figure 5 est un ordinogramme d'une variante du second mode d'exécution du procédé selon l'invention.

La figure 6 est un ordinogramme d'un procédé de constitution de groupes de dispositifs de fermeture.

La figure 7 est un ordinogramme d'une procédure de fermeture commandée par l'utilisateur et d'une procédure automatique.

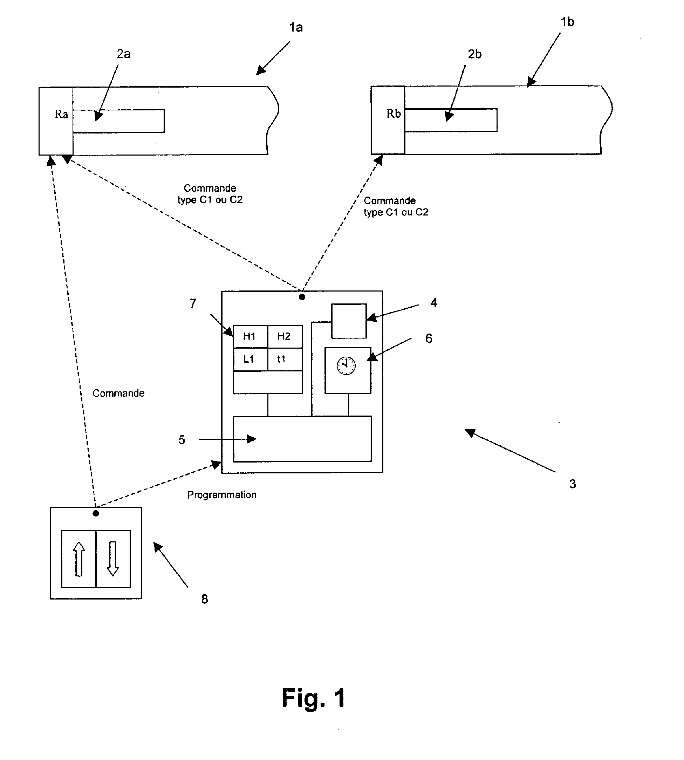

Une installation comprenant des dispositifs de fermeture motorisés 1a et 1b susceptibles d'être commandés par une unité de gestion automatique 3 ou par un émetteur d'ordres 8 est représenté à la figure 1.

L'unité de gestion automatique 3 peut communiquer avec des récepteurs d'ordres Ra, Rb, équipant les dispositifs de fermeture 1a et 1b et commandant des moteurs 2a et 2b d'entraînement de ceux-ci. Cette unité de gestion 3 comprend un microprocesseur 5, une mémoire EEPROM 7, un moyen d'émission d'ordres 4 et une horloge 6. Le microprocesseur 5 reçoit des commandes de l'horloge 6 ou de l'émetteur d'ordres 8.

On distingue deux types de commandes des récepteurs d'ordres Ra et Rb équipant les dispositifs de fermeture : l'un provenant de la gestion automatique horaire par l'horloge et l'autre provenant d'une action de l'utilisateur sur l'émetteur 8.

Dans la mémoire EEPROM 7 sont initialisées des valeurs des heures H1, H2 de commande d'ouverture ou de fermeture des dispositifs de fermeture.

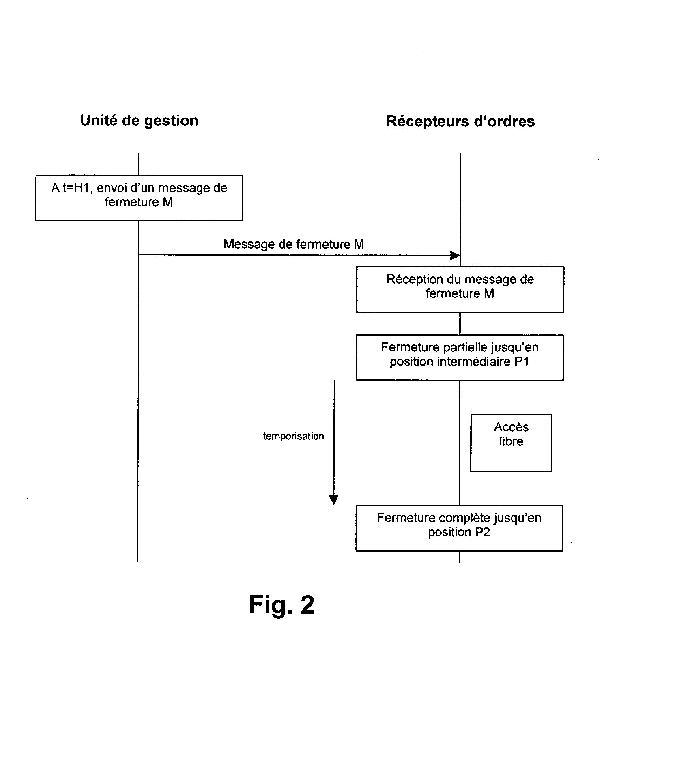

L'ordinogramme de la figure 2 décrit les étapes du procédé de fermeture automatique selon un premier mode d'exécution.

A une heure H1 donnée par l'horloge, le moyen d'émission d'ordres 4 de l'unité de gestion 3, émet un message M de commande de fermeture des dispositifs 1a et 1b en direction de leurs récepteurs Ra et Rb. A la réception de ce message, le récepteur d'ordres associé à chaque dispositif de fermeture 1a, 1b envoie une commande au moteur 2a, 2b de manière à placer le dispositif de fermeture dans une position intermédiaire de fermeture P1.

Cette position intermédiaire P1 correspond à une fermeture partielle laissant les mécanismes d'ouverture de portes, tels que des poignées ou des loquets, accessibles afin de laisser à l'utilisateur la possibilité d'entrer dans la maison.

La position intermédiaire P1 peut être définie par l'envoi vers les récepteurs d'une valeur de course stockée dans la mémoire 7 de l'unité de gestion correspondant à une durée de manoeuvre t1 ou à un comptage d'impulsions L1. Elle peut également être implémentée par l'envoi d'un message d'arrêt du déplacement après un temps t1 suivant le message de fermeture M. Enfin, elle peut être définie au niveau de chaque récepteur.

Une fois les dispositifs de fermeture arrivés en position P1, les récepteurs de ces dispositifs lancent une temporisation, au cours de laquelle il est possible à l'utilisateur d'entrer dans sa maison. Dans cette position, il est possible à l'utilisateur d'atteindre les mécanismes d'ouverture des accès et de s'introduire par ceux-ci dans la maison. La position intermédiaire P1 doit être suffisamment haute pour permettre un accès aisé sous le dispositif mais néanmoins assez basse pour que la position du dispositif soit visible par l'utilisateur. Elle est éventuellement définie par l'utilisateur. Une position intermédiaire correspondant à un dispositif arrêté aux environs du tiers de sa course est préférée. A la fin de la temporisation, les récepteurs envoient une commande de fermeture complète, de telle sorte que les dispositifs de fermeture sont actionnés de la position intermédiaire P1 vers une position fermée P2.

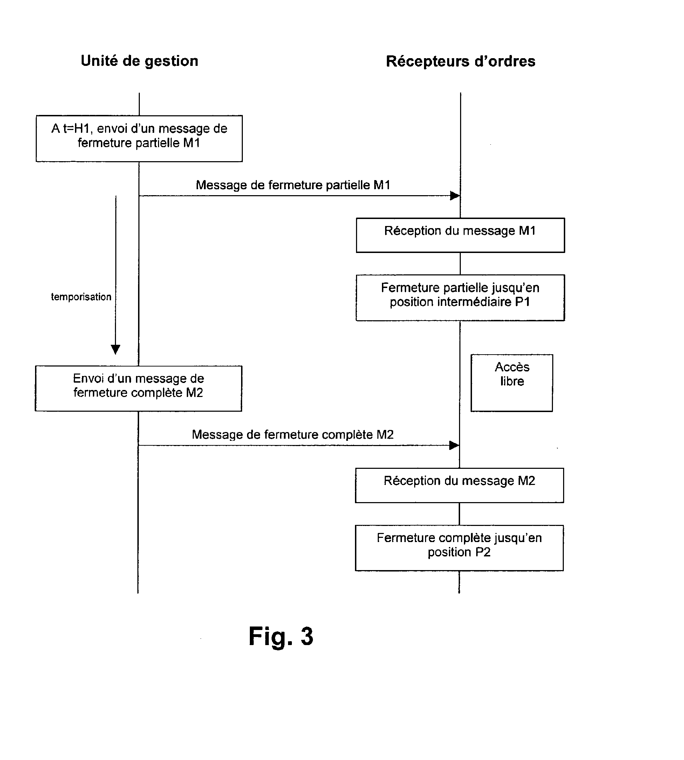

Dans une variante de ce mode d'exécution dont l'ordinogramme est représenté à la figure 3, l'unité de gestion 3 émet, à une heure H1 donnée par l'horloge 6, un message M1 de commande de fermeture partielle du système d'occultation. Il correspond à un ordre de mise en mouvement des dispositifs de fermeture vers une position intermédiaire de fermeture P1. L'unité de gestion 3 gère ensuite une temporisation avant d'envoyer un message de fermeture complète M2. A la réception de ce message M2, les récepteurs commandent la fermeture des dispositifs de fermeture à partir de la position intermédiaire P1 vers une position fermée P2.

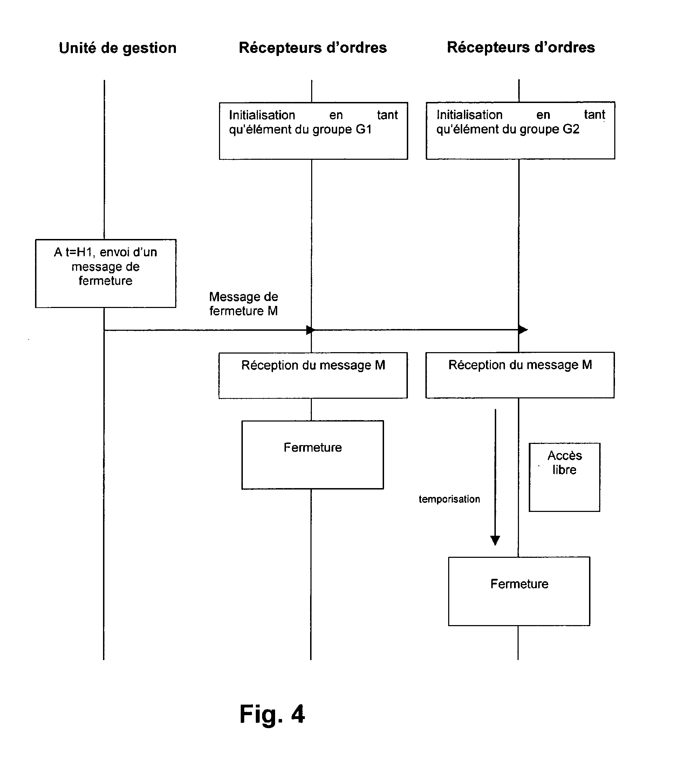

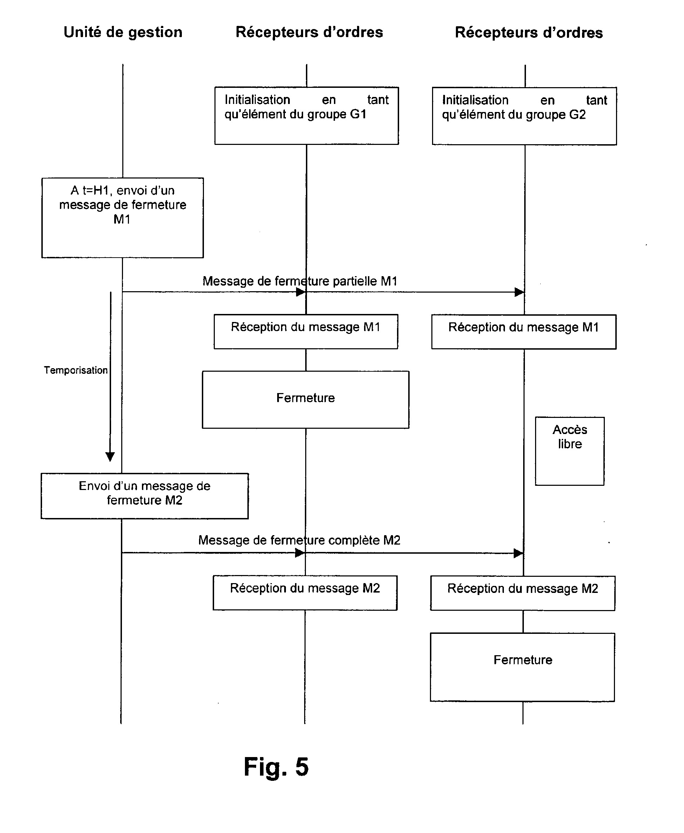

Les ordinogrammes des figures 4 et 5 représentent les étapes du procédé selon un deuxième mode d'exécution, l'ensemble des dispositifs de fermeture étant organisé en groupes.

L'installation comprend des moyens pour définir des groupes de dispositifs de fermeture. Ces moyens peuvent consister en une sélection de groupes de dispositifs de fermeture selon le type d'accès obturé par les dispositifs de fermeture. Cette sélection peut être réalisée par l'installateur ou avantageusement de façon automatique.

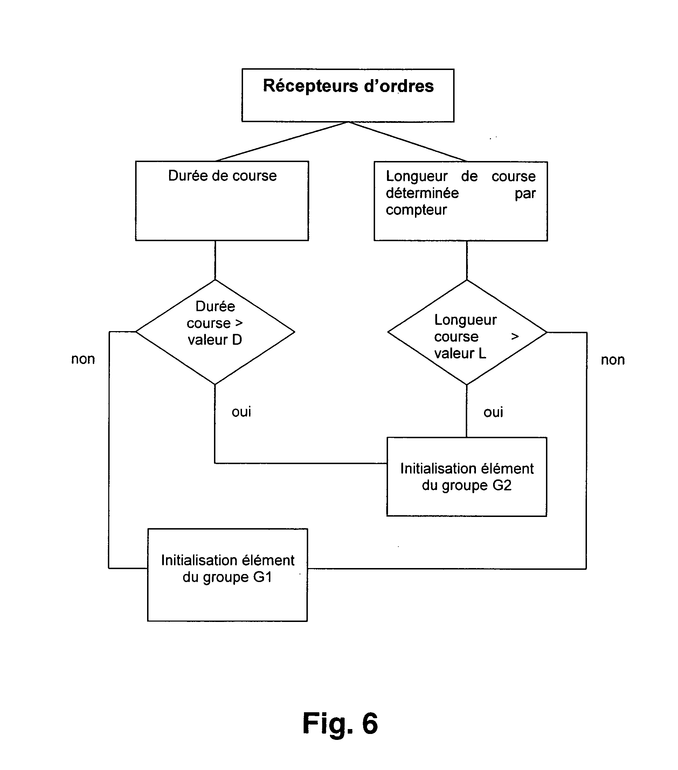

L'ordinogramme d'un procédé de sélection de groupes automatique est représenté à la figure 6. Les accès sont caractérisés par la course du dispositif de fermeture associé : les accès de type "porte" présentent une course longue et les accès de type "fenêtre" présentent une course courte. La valeur de la course d'un dispositif de fermeture (définie par une durée de manoeuvre ou un compteur d'impulsion par exemple) peut donc être comparée à une valeur de référence. Ainsi, on peut programmer une valeur de référence en durée D légèrement supérieure à la durée de déroulement d'un dispositif de fermeture monté sur une fenêtre ou une valeur de référence en longueur de course L légèrement supérieure à la hauteur d'une fenêtre. De cette manière, après une première manoeuvre, en fonction de la valeur de la course réalisée par un dispositif de fermeture, comparée aux valeurs de référence, on peut classer celui-ci automatiquement dans un groupe de type "fenêtre" G1 ou un groupe de type "porte" G2. Ce procédé est mis en oeuvre lors de la phase d'installation des dispositifs de fermeture.

Dans l'ordinogramme représenté à la figure 4, à une heure H1 donnée par l'horloge 6, l'unité de gestion 3 émet un message de commande de fermeture du système en direction des différents récepteurs Ra, Rb associés aux dispositifs de fermeture. A la réception de ce message, les récepteurs d'ordres associés aux dispositifs de fermeture du groupe de type "fenêtre" G1 envoient une commande aux moteurs de manière à placer les dispositifs de fermeture du groupe G1 en position fermée.

Les dispositifs de fermeture appartenant au groupe G2 n'obéissent à la commande de fermeture qu'après une temporisation. Cependant, si ceux-ci sont déjà fermés, le message peut d'abord être interprété comme un ordre d'ouverture d'au moins un des dispositifs de fermeture équipant les accès du groupe G2. Ainsi, les accès (portes, portes-fenêtres, baies) sont libres pendant le temps donné par la temporisation pour permettre aux habitants d'entrer dans leur résidence. La commande de fermeture pour les dispositifs de ce groupe est alors exécutée à l'issue de la temporisation initiée au moment de l'émission de l'ordre de commande de fermeture du groupe G1.

Dans une variante d'exécution du procédé dont l'ordinogramme est représenté à la figure 5, l'unité de gestion 3 émet à l'heure H1, un premier message M1 de commande de fermeture en direction des différents dispositifs de fermeture. A la réception de ce message, seuls les récepteurs d'ordres associés aux dispositifs de fermeture du groupe de type "fenêtre" G1 envoient une commande aux moteurs de manière à placer les dispositifs de fermeture du groupe G1 en position fermée. Si, au moment de l'ordre de fermeture automatique, les dispositifs de fermeture sont indifféremment ouverts, fermés ou partiellement ouverts, ils peuvent tous être commandés de manière à être amenés dans une position intermédiaire telle que définie. Ainsi, le signal d'activation de la procédure de fermeture automatique est clair et reconnaissable. Si les dispositifs de fermeture du groupe G2 sont tous fermés, ce premier message M1 pourra être interprété comme une commande d'ouverture d'au moins un dispositif de fermeture du groupe G2. Dans le cas général, le message M1 n'a aucun effet sur les dispositifs de fermeture du groupe G2. L'activation de la procédure de fermeture automatique peut être signalée à l'utilisateur par une fermeture partielle ou complète d'un groupe de dispositifs de fermeture, ce groupe étant constitué, par exemple, par l'ensemble des dispositifs de fermeture équipant les fenêtres.

Ce groupe de dispositifs de fermeture peut alors, dans un premier temps, être activé jusqu'à une position de fermeture complète tandis qu'au moins un des autres dispositifs de fermeture, équipant les accès de type "porte", est laissé ouvert ou partiellement ouvert ou, au besoin, activé jusqu'à une position d'ouverture partielle, ceci permettant l'accès à la maison. Dans un deuxième temps, après une temporisation, tous les dispositifs de fermeture sont fermés. Ainsi, l'utilisateur est averti de la mise en route de la procédure de fermeture automatique et il a le temps d'entrer dans sa résidence et/ou de désactiver l'automatisme.

A l'issue d'une temporisation gérée par l'unité de gestion, un deuxième message M2 de commande de fermeture est transmis aux différents dispositifs de fermeture. L'ensemble des dispositifs de fermeture obéit à cette commande de manière à obturer la totalité des accès.

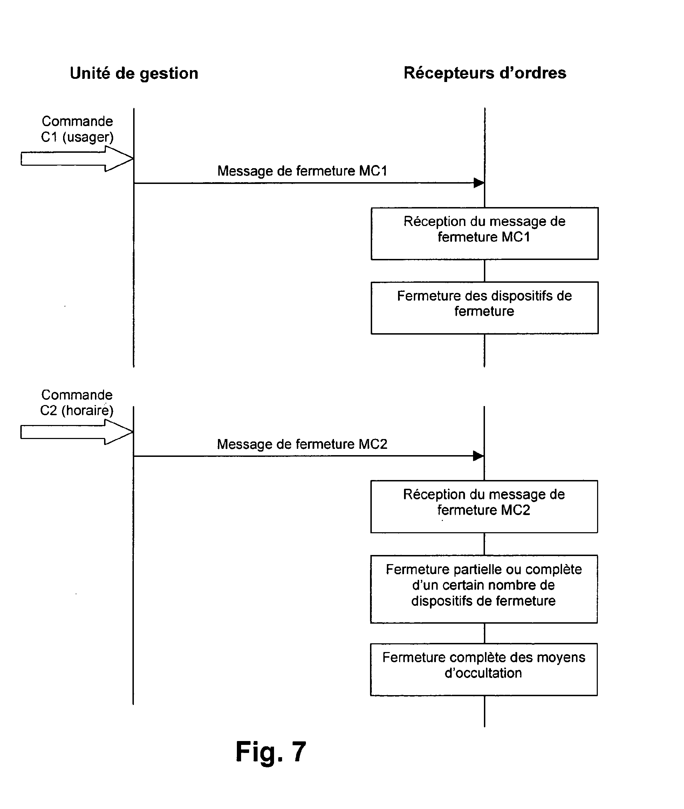

Comme représenté sur l'ordinogramme de la figure 7, on distingue les commandes provenant de l'unité de gestion 3 en deux groupes : les commandes de fermeture activées par l'utilisateur C1 et les commandes automatiques C2 activées par le programme de gestion horaire. Dans le premier cas, la fermeture complète de l'ensemble des dispositifs de fermeture est immédiate en réponse à un message de commande utilisateur MC1. Dans le deuxième cas, en réponse à un message de fermeture automatique MC2, la fermeture complète des dispositifs de fermeture est régie par le procédé de fermeture automatique objet de l'invention.

Avantageusement, la détermination des différents groupes est définie de façon automatique, par la valeur de la course totale du dispositif de fermeture, donnée interne aux éléments de commande d'actionneurs des dispositifs de fermeture.

Par exemple, les dispositifs de fermeture à durée de manoeuvre plus longue qu'un seuil prédéterminé sont présumés être montés sur des portes, portes-fenêtres ou baies vitrées. La longueur de la course peut également être donnée par un compteur d'impulsions. Les groupes peuvent également être définis par l'utilisateur.

Dans un mode de réalisation particulier, si au moment de l'ordre de fermeture automatique, les dispositifs de fermeture sont indifféremment ouverts, fermés, ou partiellement ouverts, le groupe correspondant aux accès de type "fenêtre" est commandé en fermeture tandis qu'au moins un groupe parmi les dispositifs de fermeture restants est commandé en ouverture. Ce dernier groupe peut être défini par l'utilisateur.

En principe, au moins un des accès de type "porte" est ouvert si les habitants sont à l'extérieur de la maison. Cet accès peut être une porte peu visible, à l'arrière de la résidence.

De manière à informer les habitants de façon claire que la commande automatisée de fermeture n'est pas terminée, au moins une partie des dispositifs de fermeture correspondant aux accès de type "porte" peut être ouverte sans qu'il soit nécessaire de les ouvrir tous.

Les solutions présentées précédemment peuvent être combinées, pour éventuellement provoquer deux étapes de signalisation. On peut prévoir, par exemple, dans un premier temps une fermeture partielle des dispositifs de fermeture correspondant aux accès de type "fenêtre", puis à l'issue d'une temporisation, une fermeture complète de ceux-ci et enfin, à l'issue d'une nouvelle temporisation, une fermeture complète des accès restants.

L'unité de gestion est capable de distinguer une commande ayant pour origine un programme de gestion d'une commande activée par l'utilisateur afin que la procédure de fermeture automatique puisse n'intervenir que dans le premier cas.

Comme décrit précédemment, le procédé selon l'invention permet de signaler l'activation de la procédure de fermeture automatique à l'utilisateur par une fermeture partielle ou complète d'un certain nombre de dispositifs de fermeture.

Dans les modes d'exécution décrits, le procédé de fermeture automatique est initié à une heure donnée par une horloge. Cependant, ce procédé peut également être initié par des moyens détectant une faible luminosité.

## Revendications

1. Procédé automatique activé par un événement non provoqué par l'utilisateur et permettant la fermeture d'un ensemble de dispositifs de fermeture (1a, 1b) motorisés obéissant à une unité de gestion (3) et équipant des ouvertures permettant l'accès à un bâtiment, **caractérisé en ce qu'**il comprend les étapes suivantes :
- émission depuis l'unité de gestion (3) d'un ordre de fermeture des dispositifs lors de la survenance de l'événement,
- activation d'un groupe (G1) de dispositifs vers une position prédéterminée (P1),
- temporisation,
- activation de l'ensemble des dispositifs vers leur position de fermeture complète (P2).

2. Procédé de fermeture automatique selon la revendication 1, **caractérisé en ce que** l'activation d'un groupe (G1) de dispositifs vers une position prédéterminée est une activation de ce groupe (G1) de dispositifs vers une position de fermeture complète.

3. Procédé de fermeture automatique selon la revendication 1, **caractérisé en ce que** l'activation d'un groupe (G1) de dispositifs vers une position prédéterminée est une activation de ce groupe (G1) de dispositifs vers une position de fermeture partielle.

4. Procédé de fermeture automatique selon l'une des revendications 1, 2 ou 3, **caractérisé en ce que** l'activation d'un groupe (G1) de dispositifs vers une position prédéterminée s'accompagne d'une activation d'au moins un dispositif d'un autre groupe (G2) de dispositifs vers une position au moins partiellement ouverte permettant à l'utilisateur de pénétrer dans le bâtiment.

5. Procédé de fermeture automatique selon l'une des revendications précédentes **caractérisé en ce qu'**il comprend après l'étape de temporisation l'étape suivante :
émission depuis l'unité de gestion (3) d'un ordre de fermeture complète de l'ensemble des dispositifs de fermeture.

6. Procédé de fermeture automatique selon l'une des revendications précédentes, **caractérisé en ce que** les groupes de dispositifs (G1, G2) sont déterminés de manière automatique en fonction de la valeur de la course totale de chaque dispositif de fermeture.

7. Installation pour la mise en oeuvre du procédé selon l'une des revendications 1 à 6, comprenant des dispositifs (1a, 1b) de fermeture motorisés susceptibles d'être commandés par une unité de gestion (3) munie d'un moyen d'émission d'ordres (4), d'un microprocesseur (5) lié à une mémoire (7) et à des moyens de détection d'événements non provoqués par l'utilisateur et/ou de génération de ces événements.

8. Installation selon la revendication 7, **caractérisée en ce que** le moyen de détection d'événements non provoqués par l'utilisateur est un moyen de détection de luminosité.

9. Installation selon la revendication 7 ou 8, **caractérisée en ce que** le moyen de génération d'événements (6) est une horloge.
